# EUROPEAN PATENT APPLICATION

(11) **EP 0 766 429 A2**
(43) Date of publication of application: **02.04.1997**
(21) Application number: 96113784.1
(22) Date of filing: 28.08.1996
(51) Int. Cl.: H04L 12/56

(54) **Method and apparatus for buffer management**

(30) Priority: 29.09.1995 US 536290
(71) Applicant: Hewlett-Packard Company, Palo Alto, California 94304 (US)
(72) Inventor: Natarajan, Nandakumar, Scarborough, Ontario M1L 4P2 (CA); Bennett, Dwayne, Scarborough, Ontario M1B 126 (CA); Grant, Robert, Toronto, Ontario M45 168 (CA)
(74) Representative: Schoppe, Fritz, Dipl.-Ing.

(57) **Abstract**

A fibre channel switch having a plurality of fibre ports (F_ports) to implement class 2 frame switching transfers of frames between a plurality of Node-ports (N_ports), the fibre channel switch also providing concurrent access and tracking of a plurality of memory buffers associated with each F_port that temporarily store frames prior to routing between F_ports on the fibre channel switch and a plurality of state machines, each having a one-to-one correspondence to a respective receive buffer, track the current state of each buffer to ensure the validity and status of available memory buffers prior to the transfer to a frame.

## Description

### FIELD OF THE INVENTION

The present invention relates to methods and apparatus for buffer management and for tracking the contents of receive buffers within a fibre channel network port.

### BACKGROUND OF THE INVENTION

Mainframes, super computers, mass storage systems, workstations and very high resolution display subsystems are frequently connected together to facilitate file and print sharing. Common networks and channels used for these types of connections oftentimes introduce communications bottle necking, especially in cases where the data is in a large file format typical of graphically-based applications.

There are two basic types of data communications connections between processors, and between a processor and peripherals. A "channel" provides a direct or switched point-to-point connection between communicating devices. The channel's primary task is merely to transport data at the highest possible data rate with the least amount of delay. Channels typically perform simple error correction in hardware. A "network," by contrast, is an aggregation of distributed nodes (e.g., workstations, mass storage units) with its own protocol that supports interaction among these nodes. Typically, each node contends for the transmission medium, and each node must be capable of recognizing error conditions on the network and must provide the error management required to recover from the error conditions

One type of communications interconnect that has been developed is Fibre Channel. The Fibre channel protocol was developed and adopted as the American National Standard for Information Systems (ANSI). See *Fibre Channel Physical and Signaling Interface*, Revision 4.2, American National Standard for Information Systems (ANSI) (1993) for a detailed discussion of the fibre channel standard. Briefly, fibre channel is a switched protocol that allows concurrent communication among workstations, super computers and various peripherals. The total network bandwidth provided by fibre channel is on the order of a terabit per second. Fibre channel is capable of transmitting data frames at rates exceeding 1 gigabit per second in both directions simultaneously. It is also able to transport commands and data according to existing protocols such as Internet protocol (IP), small computer system interface (SCSI), high performance parallel interface (HIPPI) and intelligent peripheral interface (IPI) over both optical fiber and copper cable.

Essentially, the fibre channel is a channel-network hybrid, containing enough network features to provide the needed connectivity, distance and protocol multiplexing, and enough channel features to retain simplicity, repeatable performance and reliable delivery. Fibre channel allows for an active, intelligent interconnection scheme, known as a "fabric," or fibre channel switch to connect devices. The fabric includes a plurality of fabric-ports (F_ports) that provide for interconnection and data frame transfer between a plurality of node-ports (N_ports) attached to associated workstations, super computers and/or peripherals. The fabric has the capability of routing data frames based upon information contained within the frames. The N-port manages the simple point-to-point connection between itself and the fabric. Transmission is isolated from the control protocol so that different topologies (e.g., point-to-point links, rings, multidrop buses, cross point switches) can be implemented.

The Fibre Channel industry standard also provides for several different types of data transfers. A class 1 transfer requires circuit switching, *i*.*e*., a reserved data path through the network switch, and generally involves the transfer of more than one data frame, oftentimes numerous data frames, between two identified network elements. In contrast, a class 2 transfer requires allocation of a path through the network switch for each transfer of a single frame from one network element to another.

Frame switching for class 2 transfers is more difficult to implement than class 1 circuit switching as frame switching requires a memory mechanism for temporarily storing incoming frames prior to their routing to another port. A memory mechanism typically includes numerous input/output (I/O) connections with associated support circuitry. Additional complexity and hardware is required when channels carrying data at different bit rates are to be interfaced.

Thus, a heretofore unaddressed need exists in the industry for new and improved systems for implementing the Fibre Channel industry standard for class 2 transfers on fiber optic networks with much higher performance and flexibility than presently existing systems. Particularly, there is a significant need for a method and apparatus for managing the buffer memory of a fibre channel switch to provide a memory management system that is responsible for coupling incoming and outgoing data frames or packets to internal switch data paths.

### SUMMARY OF THE INVENTION

A preferred embodiment of the present invention includes a fibre channel switch having a plurality of fibre ports (F_ports) to implement class 2 frame switching transfers of frames between a plurality of Node-ports (N_ports). The fibre channel switch also provides concurrent access and tracking of a plurality of memory buffers associated with each F_ports that temporarily store frames prior to routing between F_ports on the fibre channel switch. A plurality of state machines, each having a one-to-one correspondence to a respective receive buffer, track the current state of each buffer to ensure the validity and status of the buffers prior to the transfer of a frame. A priority encoder directs a frame from an N-port to the first of the plurality of memory buffers at the corresponding F-port that is available to accept the frame, and upon receipt, the associated state machine is updated with new status information. A plurality of buffer state machines are associated with the plurality of memory buffers to simplify the handling of concurrent updates of the memory buffers (i.e. one buffer might be getting filled while another is emptying and yet another is discarded).

Other aspects and advantages of the present invention will be apparent from the following detailed description, taken in conjunction with the accompanying drawings, illustrating by way of example the principles of the invention.

### BRIEF DESCRIPTION OF THE DRAWINGS

FIG. 1 is a schematic diagram of a prior art variable-length frame communicated through a fiber optic network in accordance with the Fibre Channel industry standard;
FIG. 2 shows a block diagram of a representative Fibre Channel architecture;
FIG. 3 is a schematic circuit diagram of the invention illustrating a high performance fiber optic switch constructed according to the present invention which utilizes a plurality of channel modules;
FIG. 4 shows a block diagram of one of the channel modules of FIG. 3;
FIG. 5 shows a state machine diagram depicting the accessing of the buffer architecture illustrated in FIG. 4.

### DETAILED DESCRIPTION OF THE PREFERRED EMBODIMENTS

### 1. FIBRE CHANNEL SWITCH ARCHITECTURE

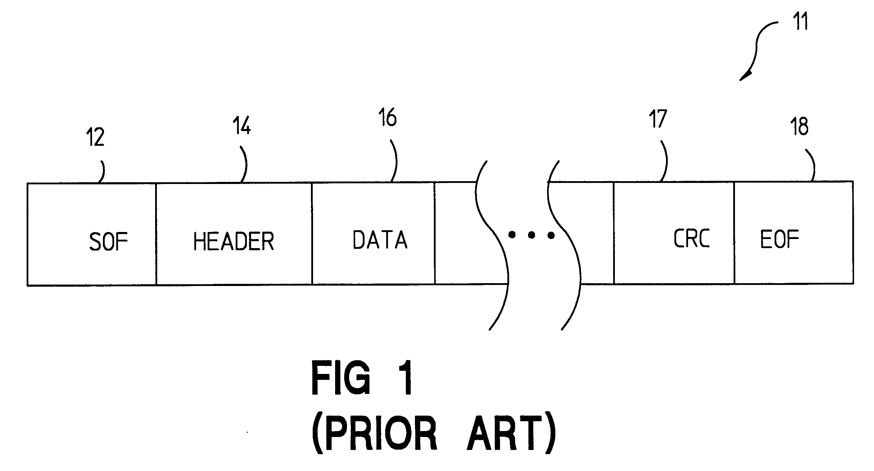

With reference now to the drawings wherein like reference numerals designate corresponding parts throughout the several views A variable-length frame 11 is illustrated in Fig. 1. The variable-length frame 11 comprises a 4-byte start-of-frame (SOF) indicator 12, which is a particular binary sequence indicative of the beginning of the frame 11. The SOF indicator 12 is followed by a 24-byte header 14, which generally specifies, among other things, the frame source address and destination address as well as whether the frame 11 is either control information or actual data. The header 14 is followed by a field of variable-length data 16. The length of the data 16 is 0 to 2112 bytes. The data 16 is followed successively by a 4-byte CRC (cyclical redundancy check) code 17 for error detection, and by a 4 byte end-of-frame (EOF) indicator 18. The frame 11 of Fig. 1 is much more flexible than a fixed frame and provides for higher performance by accommodating the specific needs of specific applications.

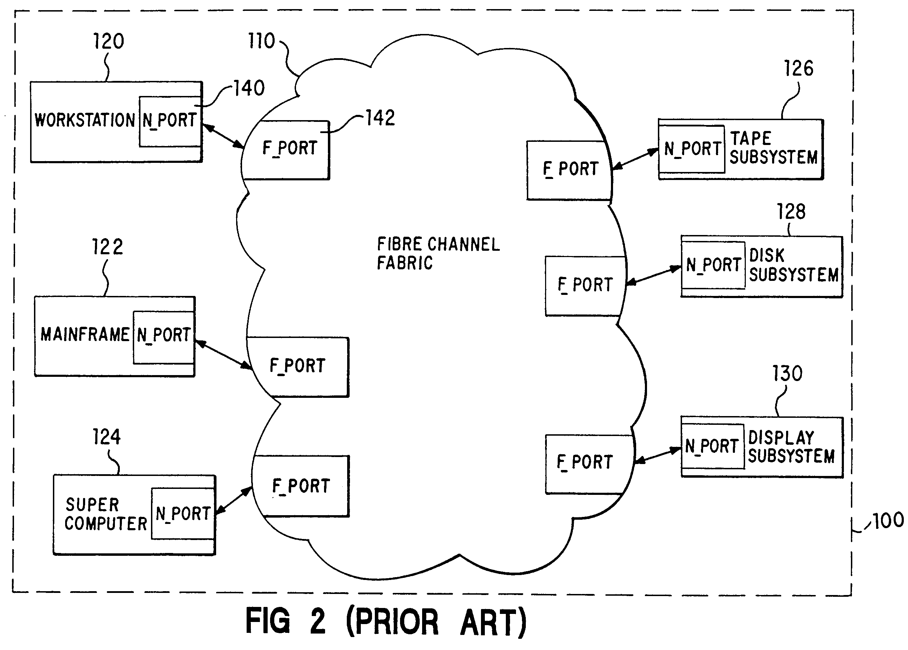

FIG. 2 illustrates a block diagram of a representative fibre channel architecture in a fibre channel network 100. A workstation 120, a mainframe 122 and a super computer 124 are interconnected with various subsystems (e.g., a tape subsystem 126, a disk subsystem 128, and a display subsystem 130) via a fibre channel fabric 110 (i.e. fibre channel switch). The fabric 110 is an entity that interconnects various node-ports (N_ports) and their associated workstations, mainframes and peripherals attached to the fabric 110 through the F_ports. The essential function of the fabric 110 is to receive frames of data from a source N_port and, using a first protocol, route the frames to a destination N_port. In a preferred embodiment, the first protocol is the fibre channel protocol. Other protocols, such as the asynchronous transfer mode (ATM) could be used without departing from the scope of the present invention.

A fibre channel switch constructed in accordance with the invention includes a plurality of interconnected F_ports for efficiently routing frames between a plurality of N_ports on a fiber channel. Each F_ port is coupled to a corresponding channel module comprising a plurality of receive buffer memories and associated state machines for tracking the contents of each buffer.

As used herein, these terms and phrases are defined as follows:
- Class 1 service--: a circuit-switched connection;
- Class 2 service--: a connectionless, frame-switched link providing guaranteed delivery and receipt notification;
- Class 3 service--: a connectionless service with no confirmation;
- F_port--: "fabric" port, the access point of the Fabric for physically connecting N_ports;
- Fabric--: a Fibre Channel-defined interconnection methodology that handles routing in Fibre Channel networks;
- Frame--: a linear set of transmitted bits that define a basic transport element;
- Intermix--: a class of service that provides functionality of both Class 1 and 2, Intermix reserves the full channel for a Class 1 connection while allowing Class 2 traffic to pass on unused bandwidth;
- Link--: a communications channel;
- N_port-- "nodes": port, a Fibre Channel-defined hardware entity at the node end of a link.

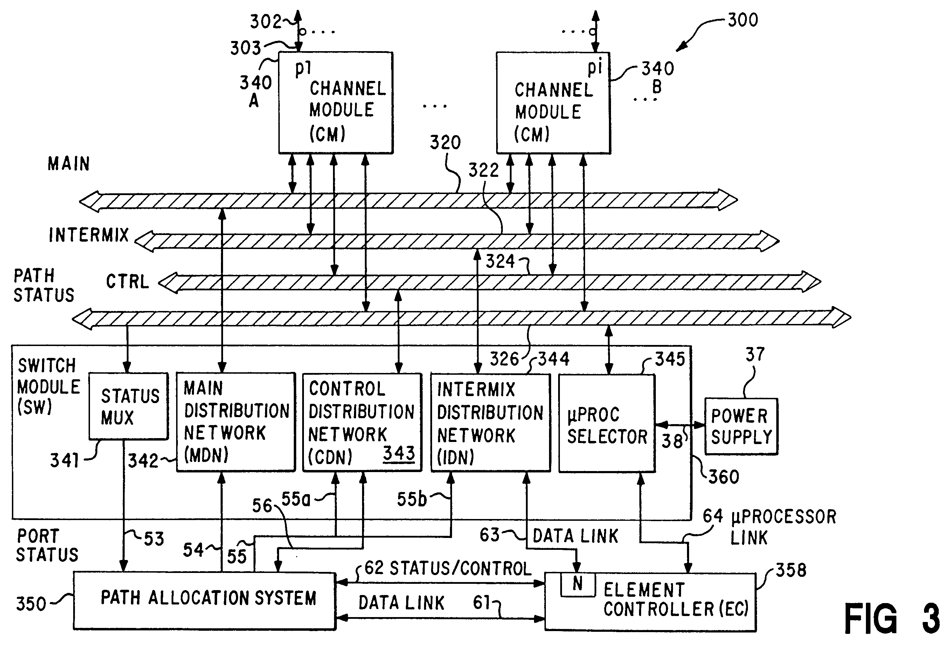

The fibre channel switch 300 illustrated in FIG. 3 employs a plurality of channel modules 340. Although FIG. 3 illustrates two channel modules 340 A and 340 B, the number of channel modules 340 may be greater than illustrated and is typically dependent upon system configuration. In a first embodiment, the fibre channel switch has four (4) channel module cards, each containing four 266 MBaud F_ports (providing for the interconnection of sixteen F_ports and associated computers and peripherals). The architecture provides for the substitution of the four 266 Mbaud channel module cards with either dual port 531 Mbaud channel module cards or a single port 1063 MBaud channel module. Each channel module 340 is coupled directly to a main link 320, an intermix link 322, a control link 324 and a path status link 326. Control signals over the control link 324 direct the transfer of frames received by one channel module 340 to a different port on the same channel module or to any other available channel module 340. The channel modules 340 provide port intelligence for data communication with the channels, buffered receive memory for temporarily storing frames for class 2 data transfers, as well as a bypass such that incoming frames are not buffered during class 1 data transfers. A path allocation system 350 communicates with the four channel modules 340 through a switch module 360. A complete description of the operation of the path allocation system 350 is disclosed in U.S. patent applications serial no. 08/330,044 entitled **"Path Allocation System and Method Having Double Link List Queues Implemented with a Digital Signal Processor"**, and serial no. 08/330,273 entitled **"High Performance Allocation System and Method with Fairness Insurance Mechanism for a Fibre Optic Switch"-**, the disclosure of which are hereby incorporated by reference.

For frame-switched traffic (class 2), the path allocation system 350 collects frame header information for each frame from the receiving port's channel module 340. The path allocation system 350 verifies the validity of the frame header information and allocates switch resources to set up a path for the frame, through the switch to the destination port. Once the frame has been forwarded, the path allocation system 350 de-allocates the switch resources.

The path allocation system 350 also collects frame header information for circuit switched traffic (Class 1 connect frames) from the channel modules 340. The path allocation system 350 then verifies the validity of the connection and allocates switch resources to set up a dedicated path for the connection to follow. The connection traffic itself will de-allocate resources.

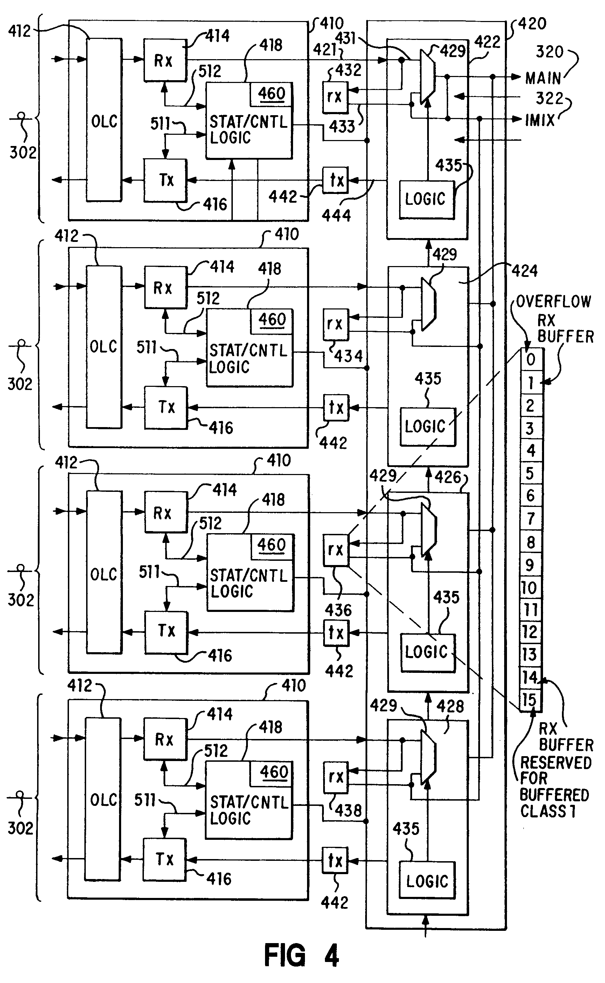

FIG. 4 shows a block diagram of the channel module architecture for a quad port, 266 Mbaud channel module comprising four port intelligence system 410 and a memory interface system 420 having four memory interface ASICs 422, 424, 426 and 428. The architecture for a double port, 531 Mbaud channel module implementation would be similar, except that the 531 implementation employs two port intelligence modules 410, each coupled to two memory interface systems having two memory interface ASIC's 422, 424 and 426, 428. The architecture for a single port, 1062 Mbaud channel module implementation would be similar, except that the 1062 implementation employs one port intelligence system 410 coupled to four memory interface systems each having one memory interface ASIC.

Each port intelligence system 410 is coupled to external N_ports through a GLM/OLC transceiver 412. Incoming frames are transferred by the GLM/OLC transceiver 412 to a receiver 414. Status/control logic circuit 418 recognizes when a new frame is received by the receiver 414 and determines the transfer class (either 1 or 2) as well as the length of data from the received frame header information attached to the frame. The purposes of the receiver 414 are to: maintain synchronization with the attached N_port; decode incoming transmission characters, to manage buffer-to-buffer flow control; gather statistics to evaluate link performance; re-time the system clock; detect, check, and validate frames; and forward all frames to the memory interface system 420 for temporary storage in associated receive memory 432, 434, 436 and 438.

The memory interface system 420, in response to commands from each port intelligence system 410, employs the four memory interface ASIC's 422, 424, 426 and 428 to interface four receive memories 432, 434, 436 and 438 (16kx16 external RAM) to internal switch data paths via the main bus 320 and imix bus 322. Frames transmitted across receive data path 421 between each port intelligence system 410 and the memory interface system 420 are bit sliced such that memory interface 422 receives bits 0-1, memory interface 424 receives bits 2-3, memory interface 426 receives bits 4-5 and memory interface 428 receives bits 6-7. Each memory interface knows its position and the baud rate at which the channel module 340 is operating. Frames read from receive memories 422, 424, 426 and 428 are reassembled to become ·byte-wide for traversing the fibre channel switch on the main bus 320 and imix bus 322.

A transmitter 416 is coupled between the memory interface system 420 and the GLM/OLC transceiver 412 and transmits frames that have been forwarded from other channel module receive memories within the fibre channel switch for encoding and transmission according to fibre channel rules. A 4kx9 FIFO transmit memory 442 is coupled between the memory interface 420 and the four transmitters 416 for interfacing the main bus 320 and imix bus 322 to each port intelligence system 410. The memory interface 420 outputs bit-sliced data that is re-formed on the transmit data path 444 at the input of the transmit memory 442.

Each memory interface 422, 424, 426 and 428 includes a multiplexer 429 for providing class 1 data bypass via connection 431 and buffered storage for class 2 data transfers via connection 433 to the receive memory. Additionally, each memory interface includes a memory control logic 435 for controlling the multiplexers 429, the receive memories 432, 434, 436, 438 and the transmit memory 442 in response to commands from the port intelligence system 410 and the path allocation system 350 (FIG. 3).

Each receive memory 432, 434, 436 and 438 is comprised of a set of sixteen memory buffers numbered 0-15 (illustrated in the expanded portion 440 of FIG. 4), each having a storage capacity of two kbytes. Memory buffers numbered 1 through 14 are designated for frame transfers of class 2, memory buffer numbered 15 is reserved for class 1 frames destined for the embedded N_port on the element controller 358 (Fig. 3), and memory buffer number 0 is reserved for overflow. A maximum size frame in accordance with the Fibre Channel industry standard occupies an entire two kbyte memory buffer plus one hundred and forty eight bytes of overflow. A binary addressing scheme "PPbbbbxxxxxxxx" is employed for the fourteen memory buffers numbered 1-14 and PP1111bbbbxxxx for the overflow memory buffer numbered 0, where PP identifies the port, and bbbb identifies the memory buffer number, at which the frame resides.

### 2. STATE MACHINE/BUFFER MEMORY ARCHITECTURE

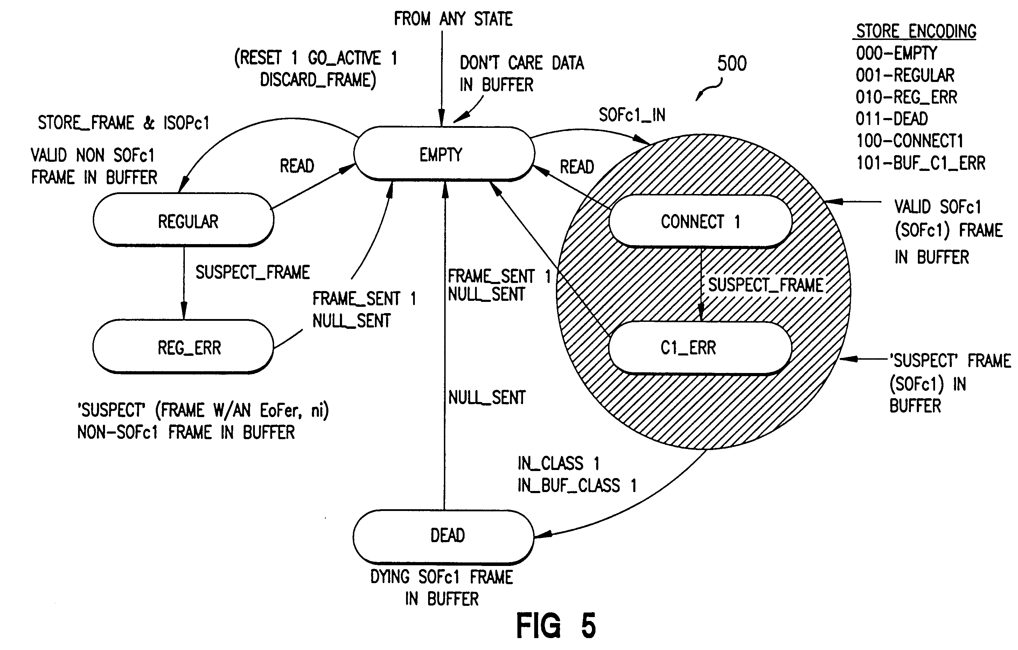

The status/control logic 418 (FIG. 4) in the port intelligence system 410 contains fifteen state machines 460 that function in accordance with the state machine diagram illustrated in FIG. 5. In particular, the state machines track the current "state" or availability of the fifteen buffer memories in each of the four receive buffers 432, 434, 436 and 438. The state machines are in a "one-to-four" correspondence to each of the fifteen memory buffers in the four sets. Thus, the first state machine tracks the contents in each of the four memory buffers numbered 1, the second state machine tracks the contents in the four memory buffers numbered 2, and so on.

As illustrated in Fig. 5, the different buffer states of the port to be maintained by the fifteen state machines include the EMPTY state (indicating "don't care data in the memory buffer"), the REGULAR state (indicating "valid non-class 1 frame in the memory buffer" (i.e. non-class 1 Start Of Frame or non-SOFc1)) , the REG_ERR state indicating a "suspect" frame in the buffer, i.e. a non-class 1 frame with an End of Frame detected (EOFa,ni) delimiter, the CONNECT1 state (indicating that a valid class 1 SOFc1 has been received to initiate class 1 service], the C1_ERR state indicating a "suspect" SOFC1 frame for a class 1 service request is in the memory buffer having a EOF delimiter, and finally, the DEAD state (indicating that an SOFc1 frame is received on the transmitter side while an another SOFc1 frame is present in the receive memory).

When the receiver 414 receives a frame from an N_port on the fibre channel and the GLM/OLC 412 the Status/Control logic 418 operates as a priority encoder to sequentially direct each incoming frame to the first buffer (starting at buffer memory number 1) having a corresponding state machine in the EMPTY state (indicating that the corresponding memory buffer is available to begin a class 1 connect and/or receive a frame for class 2 operation).

A class 1 connection is requested upon the receipt of a frame including a valid start of frame header for a class 1 connection (SOFc1_in). The frame is temporarily stored in the first available buffer memory (as the port intelligence system does not know whether a valid Class 1 connection can be established). The path allocation system 350 determines the potential for Class 1 operation from the path data in the frame header, and simultaneously, the corresponding buffer state machine is updated to a CONNECT1 state (or REG_C1_ERR if there is a CRC error) . A switch path to the destination port and the backward path from the destination port to the source port is configured by the path allocation system 350 (FIG. 3) based on the port address data in the frame header. The path allocation system 350 instructs the destination port to expect a frame and then instructs the status/control logic 418 to issue a FORWARD command to the memory interface system 420. Upon receipt of the FORWARD command, a SOFc1 frame is forwarded to the destination, the corresponding buffer memory state machine is checked to determine the validity of the buffer memory contents. If the state machine indicates that the frame is valid (corresponding to the "Regular" state), the length of the frame is calculated by counting the number of words and passed from the port intelligence system to the status/control logic 418 using a serial line in which the length is shifted across one bit at a time such that the frame can be read from the receive memory 432, 434, 436, 438. Upon receiving a FORWARD command (or a frame busy (F_BSY) indicating that a new frame has resided in the receive memory for a predetermined time period (F_BSY time period) or fabric reject (F_RJT)), the status control logic 418 waits the duration (based on the forward rate) required to read out the frame from the buffer and issues a "frame_sent" signal to reset the ports state machine to an EMPTY value, thus indicating the availability of the buffer memory. The destination F_port replies to the forwarded SOFc1 frame with an SOFn1 frame to acknowledge (ACK) the class 1 connection request. Multiplexer 431 in response to commands from the status/control logic 418 ensures that this frame is transferred through the switch without getting stored as the class 1 service is now established. As long as the class 1 connection exists, all class 1 frames (SOFn1/il) from either N_ports pass directly without getting stored from one port to the other. Upon receipt of an SOFn1 frame with an EOFdt delimiter, the class 1 connection between the two N_ports is brought down.

Class 2 operation is initiated by the receipt from an N_port of a non-SOFc1 frame. The frame is temporarily stored in the corresponding F_ports first available buffer memory (in the same manner as a class 1 frame), whereupon the corresponding state machine is updated to a "REGULAR" state indicating that the buffer memory is currently storing a potentially valid class 2 frame. The path allocation system 350 asks for the destination port address data from the frame header, and configures the fibre channel switch. The path allocation system 350 tells the destination port to expect a frame and requests the status control logic 418 to generate a FORWARD command. Upon receipt of a FORWARD command, the corresponding buffer memory state machine is checked to determine the validity of the buffer memory contents. If the state machine indicates that the frame is valid (corresponding to the "Regular" state), the length of the frame is calculated by counting the number of words and passed from the port intelligence system to the status/control logic 418 using a serial line in which the length is shifted across one bit at a time such that the frame can be read from the receive memory 432, 434, 436, 438. Upon receiving a FORWARD command (or a fabric busy (F_BSY) or fabric reject (F_RJT)), the status control logic 418 waits the duration (based on the forward rate) required to read out the frame from the buffer and issues a "frame_sent" signal to reset the receiving ports state machine to an EMPTY value, thus indicating the availability of the buffer memory. In the case of a discard, the reset is done immediately.

If during the forwarding of a frame between F_ports, the state machine for the receiving port indicates that the buffer memory is in either the 'EMPTY' or 'DEAD' state, a 'null signal' is employed for indicating that an empty buffer has been forwarded and to signal the destination port 'expecting' the frame that none will be coming.

If the receiving port receives a frame determined to be invalid, the receiver 414 will issue a SUSPECT FRAME command changing the REGULAR state to the REG_ERR state, or for class 1 operation, the CONNECT1 state to the C1_ERR state. Upon issuance of a frame_sent1 or null_sent command (a command that informs the destination port that is expecting a frame, to stop expecting), the corresponding state machines will return to the EMPTY state. Alternatively, and while in the C1_ERR state, if an in_class1 or in_buf_class1 command is issued, the state machine will change to the DEAD state. Upon issuance of a null_sent command, the state will go to the EMPTY state.

If a problem is encountered with the frame header (e.g. an invalid destination id), a F_BSY or F_RJT command is issued by the path allocation system 350. Upon receipt of a F_BSY command, the status/control logic 418 sends a signal to memory interface system 420 to wait until the entire frame is received. If the frame has no error, a confirm is issued. The length is not sent as it is fixed for a F_BSY or F_RJT.

A new frame(s) may be received from an F-port concurrently with the forwarding of a frame and the updating of the associated buffer state machine (as there are a plurality of buffers and corresponding state machines for each F_port). Simultaneously, a frame in another buffer memory may be discarded. A plurality of buffer state machines enable all of the above operations to happen concurrently. For example, a frame may be stored in a buffer memory while the contents of another buffer memory is discarded, while yet another is being forwarded through the fibre channel switch.

While the present invention has been illustrated and described in connection with the preferred embodiment, it is not to be limited to the particular structure shown. It should be understood by those skilled in the art that various changes and modifications may be made within the purview of the appended claims without departing from the spirit and scope of the invention in its broader aspects.

## Claims

1. An apparatus for buffer memory management in a fibre channel switch having a plurality of ports (302) that support the transmission of frames between a first and second device coupled to the plurality of ports, comprising:
a plurality of buffer memories (432, 434, 436, 438) at each port employed for temporarily storing frames received from the first device prior to routing by the fibre channel switch to a destination port and the associated second device,
a plurality of state machines (500), each corresponding to a selected buffer memory, wherein the state machines (500) maintain buffer status information representative of whether the buffer memory is available to receive a frame,
status/control logic (418) for analyzing buffer status information and for directing a received frame to the first of the plurality of buffer memories at the first receiving port that becomes available, and for updating the state machine (500) corresponding to the first available buffer.

2. The apparatus for buffer memory management as claimed in claim 1, the plurality of buffer memories (432, 434, 436, 438) each being identified by a sequential number, wherein, the status/control logic (418) analyzes buffer status information and directs the received frame to the buffer memory having the lowest sequential number that is available.

3. The apparatus for buffer memory management as claimed in claim 1, wherein the state machine (500) corresponding to the first available buffer memory is updated to a state ("REGULAR") indicating that a potentially valid frame has been stored.

4. The apparatus for buffer memory management as claimed in claim 1, further comprising a path allocation system (350) for processing frame header information to determine the address of the destination port to which the frame is to be forwarded.

5. The apparatus for buffer memory management as claimed in claim 4, wherein the status/control logic (418) generates a control signal ("FORWARD") directing the buffer memory to forward the frame to the port having the corresponding destination address.

6. The apparatus for buffer memory management as claimed in claim 5, wherein the status/control logic (418) calculates the length of the frame by counting the number of words in the frame.

7. The apparatus for buffer memory management as claimed in claim 6, wherein the status/control logic (418):
stores the length of the frame in a length register,
passes the length of the frame to the memory controller (435) by shifting one bit at a time over a serial line,
confirms that the state machine (500) is valid,
reads the frame out of the buffer (432, 434, 436, 438) by generating the forward control signal,
issues a reset control signal ("frame_sent") to reset the corresponding state machine (500) to an "EMPTY" state indicating the availability of the buffer memory.

8. The apparatus for buffer memory management as claimed in claim 6, wherein, the plurality of buffer memories (432, 434, 436, 438) and corresponding state machines (500) provide for reception of frames from a device concurrently with the forwarding of a frame.

9. The apparatus for buffer management as claimed in claim 1, wherein, buffer status information further comprises, the REG_ERR state indicating a non-class 1 "suspect frame" is in the memory buffer (i.e., frame with an EOFa,ni), the CONNECT1 state indicating that a valid class 1 SOFc1 has been received to initiate class 1 service, the C1_ERR state indicating that a "suspect" SOFC1 frame for a class 1 service request is in the memory buffer (like the REG-ERR state), and finally, the DEAD state indicating that there is a dying SOFc1 frame in the memory buffer.

10. The apparatus for buffer management as set forth in claim 9, wherein, if during the forwarding of the frame, the state machine (500) for the receiving port indicates that the buffer memory storing the frame is in either the 'EMPTY' or 'DEAD' state, a 'null signal' is transmitted to inform the destination F_port that no frame is coming.
